# EUROPEAN PATENT APPLICATION

(11) **EP 2 246 383 A1**
(43) Date of publication of application: **03.11.2010**
(21) Application number: 08791747.2
(22) Date of filing: 28.07.2008
(51) Int. Cl.: C08G 73/10, C08F 299/02, C08G 73/12

(54) **IMIDE OLIGOMER AND POLYIMIDE RESIN OBTAINED BY THERMAL CURING THEREOF**

(30) Priority: 07.02.2008 JP 2008027704; 07.02.2008 JP 2008027705
(71) Applicant: DAIWA CAN COMPANY, Tokyo 103-8240 (JP)
(72) Inventor: NISHINO, Hideo, Tokyo 103-8240 (JP); WATANABE, Yasuyo, Tokyo 103-8240 (JP); INOUE, Yoichiro, Tokyo 103-8240 (JP)
(74) Representative: Henkel, Feiler & Hänzel
(86) International application number: PCT/JP2008/063512
(87) International publication number: WO 2009/098791

(57) **Abstract**

To provide an imide oligomer, excellent in thermal moldability, having excellent heat resistance as a thermally-cured polyimide resin, and that is obtainable easily and inexpensively.

An imide oligomer including a nonaxisymmetric site derived from one nonaxisymmetric aromatic diamine molecule represented by below formula (1), only at a central portion of the oligomer chain, 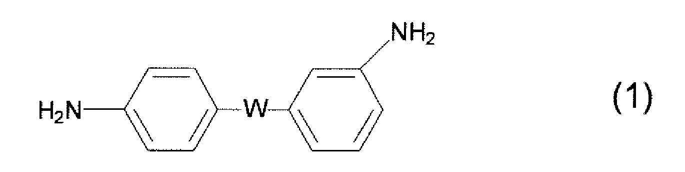 in the formula (1), W is a direct bond, -O-, -CH₂-, -C₂H₄-, -C(CH₃)₂-, -CF₂-, -C₂F₄-, -C(CF₃)₂-, -C(=O)-, -NH-, -NH-C(=O)-, -C(=O)-NH-, -S-, -S(=O)-, or -S(=O)₂-.

## Description

### RELATED APPLICATIONS

This application claims the priority of Japanese Patent Application No. 2008-027704 and Japanese Patent Application No. 2008-027705 filed on February 7, 2008, which are incorporated herein by reference.

### FIELD OF THE INVENTION

The present invention relates to thermosetting imide oligomers, and in particular, relates to imide oligomers, which are excellent in moldability, and from which polyimide resins excellent in heat resistance can be obtained by thermal curing thereof.

### BACKGROUND OF THE INVENTION

Polyimide resins are excellent in heat resistance, and they show a very high thermal decomposition temperature. Therefore, they are used as a matrix for carbon-fiber-reinforced structural material in the fields of rockets and artificial satellites (for example, refer to non-patent literature 1). In recent years, with information densification and acceleration, electronic components with the use of Si-C are actively researched in the LSI field where Si wafers are used. For LSI and the like with the use of Si-C, the operation at a temperature that exceeds 400 °C is assumed. However, even the conventional polyimide resin, which is said to be excellent in heat resistance, cannot deal with this. Thus, the use of films of not only polyimide resins but also various heat-resistant polymers has been investigated (for example, refer to non-patent literature 2).

On the other hand, because polyimide resins are highly heat resistant, there are problems in that the crystal structure is rigid, the dissolution and melting properties are deficient, and the molding is difficult. In recent years, the research and development of imide oligomers that have thermosetting properties are in progress to solve these problems. Namely, there is an effort to obtain a polyimide resin compact having high heat resistance by adding a crosslinkable functional group, such as 4-phenylethynylphthalic acid anhydride, to the terminals of an imide oligomer and by thermally curing the resin, after molding the imide oligomer, through crosslinking reactions between oligomer chains.

In addition, to improve the dissolution and melting properties of such an imide oligomer or to improve the properties of the obtained polyimide resin, an imide oligomer in which a nonaxisymmetric biphenyl acid dianhydride, such as 2,3,3',4'-biphenyltetracarboxylic acid dianhydride, is introduced was proposed (for example, refer to patent literature 1). In the normal polyimide structure, the linearity is high and the intermolecular interaction is very strong. On the other hand, when such a nonaxisymmetric molecule is introduced, the polyimide chain shows helicity and the intermolecular interaction becomes weak. Thus, it has been clarified that that the thermal melting property and the colorability improve (for example, refer to non-patent literature 3).

In addition, it is reported that an imide oligomer in which a soft diamine, such as 1,3-bis(4-aminophenoxy)benzene, and a rigid diamine, such as 3,4'-diaminodiphenyl ether, are used in a specific ratio is suitable for molding a polyimide resin by resin transfer molding (RTM) and resin infusion (RI) technology (for example, refer to patent literature 2).

Patent Literature 1: Japanese Unexamined Patent Publication 2000-219741
Patent Literature 2: U.S. Patent No. 6,359,107
Non-patent Literature 1: Masaaki Kakimoto ed., "Leading Edge Material and Application of Polyimide", CMC Publishing CO.,LTD.
Non-patent Literature 2: "Study for Practical Application and Strategy of Prevailing the Introduction in SiC Power Electronics", R&D Association for Future Electron Devices, March, 2005
Non-patent Literature 3: Masatoshi Hasegawa et. al., Macromolecules, 1999, 32, p382

### DISCLOSURE OF THE INVENTION

### PROBLEM TO BE SOLVED BY THE INVENTION

However, the nonaxisymmetric acid dianhydride or the aromatic diamine monomers used in patent literatures I and 2 are difficult to synthesize and relatively expensive. Therefore, the application of the thus obtained imide oligomers with high heat resistance and easy thermal moldability to various fields has been practically difficult.
That is, an object of the present invention is to provide an imide oligomer, excellent in thermal moldability, having excellent heat resistance as a thermally-cured polyimide resin, and that is obtainable easily and inexpensively.

### MEANS TO SOLVE THE PROBLEM

The present inventors have diligently studied in view of the above-described problems of the conventional art. As a result, the present inventors have found that an imide oligomer excellent in thermal moldability can be obtained by placing one nonaxisymmetric aromatic diamine molecule (for example, 3,4'-diaminodiphenyl ether or 3,4'-diaminodiphenylmethane), wherein two amino groups are not on the same axis, only at the central portion of the imide oligomer chain. This is because the obtained imide oligomer has helicity. In addition, the present inventors have also found that the polyimide resin that is obtained by thermally curing this imide oligomer shows excellent heat resistance, thus leading to completion of the present invention.

That is, the imide oligomer of the present invention is characterized by including a nonaxisymmetric site derived from one nonaxisymmetric aromatic diamine molecule represented by the below formula (1), only at the central portion of the oligomer chain.

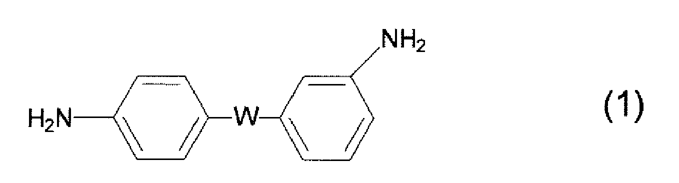

In the above formula (1), W is a direct bond, -O-, -CH₂-, -C₂H₄-, -C(CH₃)₂-, -CF₂-, -C₂F₄-,-C(CF₃)₂-, -C(=O)-, -NH-, -NH-C(=O)-, -C(=O)-NH-, -S-, -S(=O)-, or -S(=O)₂-.

In addition, it is preferable that the imide oligomer is represented by the below formula (2).

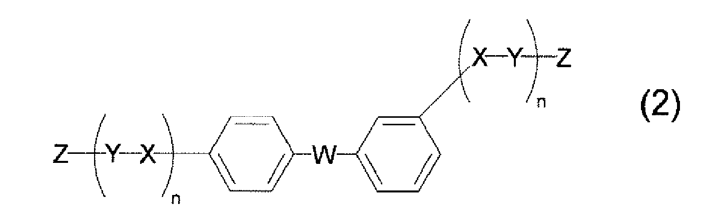

In the above formula (2), W is a direct bond, -O-, -CH₂-, -C₂H₄-, -C(CH₃)₂-, -CF₂-, -C₂F₄-,-C(CF₃)₂-, -C(=O)-, -NH-, -NH-C(=O)-, -C(=O)-NH-, -S-, -S(=O)-, or -S(=O)₂-, X is an acid dianhydride residue, Y is a diamine residue, Z is a crosslinking reactive group, and n is the average degree of polymerization of each polyimide segment represented by (X-Y) and it is 1 to 10.

In the imide oligomer, it is preferable that W in the general formula (1) or (2) is - O- or -CH₂-.

In the imide oligomer, it is preferable that the average degree of polymerization of each polyimide segment n is I to 6 and that the average molecular weight of the entire imide oligomer is 8000 or less.

In the imide oligomer, it is preferable that the acid dianhydride residue X is derived from at least one or more acid dianhydrides selected from pyromellitic acid dianhydride, 3,3',4,4'-benzophenone tetracarboxylic acid dianhydride, 4,4'-biphthalic acid dianhydride, 3,3',4,4'-diphenyl sulfonic acid, 4,4'-oxydiphthalic acid dianhydride, 3,4,9,10-perylenetetracarboxylic acid dianhydride, naphthalene-1,4,5,8-tetracarboxylic acid dianhydride, 4,4'-(hexafluoroisopropylidene)diphthalic acid dianhydride, and 2,2-bis(4-carboxyphenyl)propanoic acid dianhydride.

In the imide oligomer, it is preferable that the diamine residue Y is derived from at least one or more diamines selected from 4,4-diaminodiphenyl ether, 1,3-bis(3-aminophenoxy)benzene, 1,3-bis(4-aminophenoxy)benzene, 1,4-bis(4-aminophenoxy)benzene, 2,2-bis(4-aminophenyl)hexafluoropropane, bis(4-aminophenyl)sulfone, 2,2-bis[4-(4-aminophenoxy)phenyl]hexafluoropropane, α,α'-bis(4-aminophenyl)-1,4-diisopropylbenzene, and 3,3'-bis(4-aminophenyl)fluorene.

In the imide oligomer, it is preferable that the terminal crosslinking reactive group Z is derived from at least one or more compounds selected from 4-phenylethynylphthalic acid anhydride, phthalic acid anhydride, 5-norbornene-2,3-dicarboxylic acid anhydride, 2,5-norbornadiene-2,3-dicarboxylic acid anhydride, maleic acid anhydride, propargylamine, phenylethynylaniline, ethynylaniline, aminostyrene, and vinylaniline.

In addition, the amic acid oligomer of the present invention is characterized by including a nonaxisymmetric site derived from one nonaxisymmetric aromatic diamine molecule represented by the above formula (1), only at the central portion of the oligomer chain.

In addition, the polyimide resin of the present invention is characterized by being obtained by thermally curing the imide oligomer.

The production method of the imide oligomer of the present invention is a production method of an imide oligomer including a nonaxisymmetric site derived from one nonaxisymmetric aromatic diamine molecule represented by the above formula (1), only at the central portion of the oligomer chain, and the production method is characterized by comprising (A) a preparation step of an oligomer precursor by reacting a nonaxisymmetric aromatic diamine represented by the above formula (1) and a large excess of an acid dianhydride and (B) a preparation step of an imide oligomer or an amic acid oligomer by the polycondensation of the oligomer precursor obtained in the above step, unreacted acid dianhydride, and a diamine.

In the production method of the imide oligomer, it is preferable that the production method further comprises (C) a terminal modification step of the imide oligomer or the amic acid oligomer obtained in the above steps by using a compound having a crosslinking reactive group.

### EFFECT OF THE INVENTION

According to the present invention, a helical imide oligomer can be obtained by placing one nonaxisymmetric aromatic diamine molecule (for example, 3,4'-diamninodiphenyl ether or 3,4'-diaminodiphenylmethane), wherein two amino groups are not on the same axis, only at the central portion of the imide oligomer chain. As a result, the imide oligomer, which is excellent in thermal moldability and whose thermally-cured polyimide resin is excellent in heat resistance, can be obtained easily and inexpensively.

### BRIEF DESCRIPTION OF THE DRAWINGS

Fig. 1 shows (A) a three-dimensional structural drawing of imide oligomer 1A and (B) a three-dimensional structural drawing of an imide oligomer without a nonaxisymmetric site.
Fig. 2 shows (A) a three-dimensional structural drawing of imide oligomer 1A in which the imide oligomer has a nonaxisymmetric site only at the central portion of the oligomer chain and the degree of polymerization of the polyimide segment is 2 and (B) a three-dimensional structural drawing of the imide oligomer in which the degree of polymerization of the polyimide segment is 6.

### BEST MODE FOR CARRYING OUT THE INVENTION

The imide oligomer of the present invention is characterized by including a nonaxisymmetric site derived from one nonaxisymmetric aromatic diamine molecule represented by the below formula (1), only at the central portion of the oligomer chain.

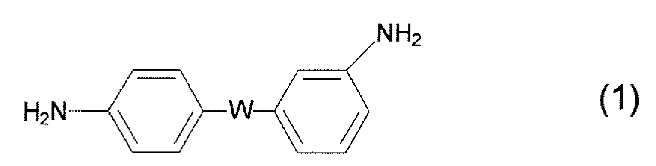

In a compound represented by the above formula (1), amino groups are bonded to the 3-position and the 4-position, respectively, on the two benzene rings, which are directly bonded or bonded through a specific functional group. The bonding positions of respective amino groups are not axially symmetric around W, namely, it is a nonaxisymmetric aromatic diamine.

In the above formula (1), W is a direct bond, -O-, -CH₂-, -C₂H₄-, -C(CH₃)₂-, -CF₂-, -C₂F₄-, -C(CF₃)₂-, -C(=O)-, -NH-, -NH-C(=O)-, -C(=O)-NH-, -S-, -S(=O)-, or -S(=O)₂-.

More specifically, nonaxisymmetric aromatic diamines represented by the above formula (1) are 3,4'-benzidine (W is a direct bond), 3,4'-diaminodiphenyl ether (W is -O-), 3,4'-diaminodiphenylmethane (W is -CH₂-), 3,4'-diaminodiphenylethane (W is -C₂H₄-), 3,4'-diaminodiphenylisopropane (W is -C(CH₃)₂-), 3,4'-diaminodiphenyldifluoromethane(W is - CF₂-), 3,4'-diaminodiphenyltetrafluoroethane (W is -C₂F₄-), 3,4'-diaminodiphenylhexafluoroisopropane (W is -C(CF₃)₂-), 3,4'-diaminobenzophenone (W is - C(=O)-), 3,4'-diaminodiphenylamine (W is -NH-), N-(4-aminophenyl)-3-aminobenzamide (W is -NH-C(=O)-), N-(3-aminophenyl)-4-aminobenzamide (W is -C(=O)-NH-), 3,4'-diaminodiphenyl sulfide (W is -S-), 3,4'-diaminodiphenyl sulfoxide (W is -S(=O)-), and 3,4'-diaminodiphenyl sulfone (W is -S(=O)₂-). Among them, 3,4'-diaminodiphenyl ether or 3,4'-diaminodiphenylmethane can be especially preferably used. These nonaxisymmetric aromatic diamines may be used either alone or in combination of two or more.

That is, the imide oligomer of the present invention is a compound in which equivalent weights (equimolar amounts) of imide oligomer chains formed by the polycondensation of a certain acid dianhydride and a diamine are added to the respective terminal amino groups of one nonaxisymmetric aromatic diamine molecule represented by the above formula (1). Thus, a nonaxisymmetric site derived from one nonaxisymmetric aromatic diamine molecule, is located only at the central portion of the oligomer chain.
The imide oligomer of the present invention is represented, for example, by the below formula (2).

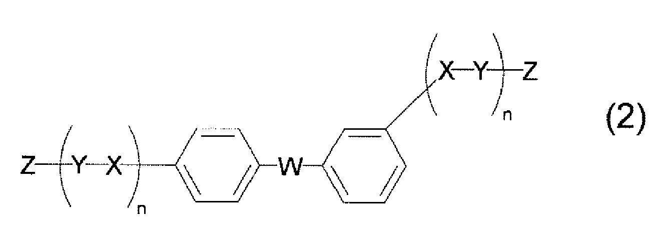

In the above formula (2), W is the same as that in the above formula (1), a direct bond, -O-, -CH₂-, -C₂H₄-, -C(CH₃)₂-, -CF₂-, -C₂F₄-, -C(CF₃)₂-, -C(=O)-, -NH-, -NH-C(=O)-,-C(=O)-NH-, -S-, -S(=O)-, or -S(=O)₂-.

In the above formula (2), X is an acid dianhydride residue. The acid dianhydride used in the imide oligomer of the present invention is not limited in particular so far as it is axially symmetric and a polyimide structure can be formed by the condensation reaction with a diamine. Examples of acid dianhydrides used in the present invention include pyromellitic acid dianhydride, 3,3',4,4'-benzophenone tetracarboxylic acid dianhydride, 4,4'-biphthalic acid dianhydride, 3,3',4,4'-diphenyl sulfonic acid, 4,4'-oxydiphthalic acid dianhydride, 3,4,9,10-perylenetetracarboxylic acid dianhydride, naphthalene-1,4,5,8-tetracarboxylic acid dianhydride, 4,4'-(hexafluoroisopropylidene)diphthalic acid dianhydride, and 2,2-bis(4-carboxyphenyl)propanoic acid dianhydride. Among them, 4,4'-oxydiphthalic acid dianhydride, 4,4'-biphthalic acid dianhydride, 3,3',4,4'-diphenyl sulfonic acid, and 4,4'-(hexafluoroisopropylidene)diphthalic acid dianhydride can be especially preferably used.

In the above formula (2), Y is a diamine residue. The diamine used in the imide oligomer of the present invention is not limited in particular so far as it is axially symmetric and a polyimide structure can be formed by the condensation reaction with an acid dianhydride. Examples of diamines used in the present invention include 4,4-diaminodiphenyl ether, 1,3-bis(3-aminophenoxy)benzene, 1,3-bis(4-aminophenoxy)benzene, 1,4-bis(4-aminophenoxy)benzene, 2,2-bis(4-aminophenyl)hexafluoropropane, bis(4-aminophenyl)sulfone, 2,2-bis[4-(4-aminophenoxy)phenyl]hexafluoropropane, α,α'-bis(4-aminophenyl)-1,4-diisopropylbenzene, and 3,3'-bis(4-aminophenyl)fluorene. Among them, 4,4-diaminodiphenyl ether, bis(4-aminophenyl)sulfone, and 1,3-bis(3-aminophenoxy)benzene can be especially preferably used.

In the above formula (2), Z is a crosslinking reactive group. In the imide oligomer of the present invention, thermosetting properties are provided by the modification of the terminals with a compound having a crosslinking reactive group. Examples of compounds with a crosslinking reactive group and used in the present invention include 4-phenylethynylphthalic acid anhydride, phthalic acid anhydride, 5-norbornene-2,3-dicarboxylic acid anhydride, 2,5-norbornadiene-2,3-dicarboxylic acid anhydride, maleic acid anhydride, propargylamine, phenylethynylaniline, ethynylaniline, aminostyrene, and vinylaniline. Among them, 4-phenylethynylphthalic acid anhydride and 5-norbornene-2,3-dicarboxylic acid anhydride can be especially preferably used.

In the above formula (2), n is the average degree of polymerization of the polyimide segment represented by (X-Y) and it is 1 to 10. This average degree of polymerization can be suitably adjusted by varying the ratios between the nonaxisymmetric aromatic diamine, acid dianhydride, and diamine used in the production of the imide oligomer. In the imide oligomer of the present invention, if the average degree of polymerization of each polyimide segment n exceeds 10, the thermal melting property may become poor and the molding may become difficult. From the viewpoint of moldability of the imide oligomer, the average degree of polymerization of each polyimide segment is preferably 1 to 6, and more preferably 2 to 5. If the average degree of polymerization of each polyimide segment is within the above-described range, an imide oligomer that is excellent especially in moldability can be obtained.

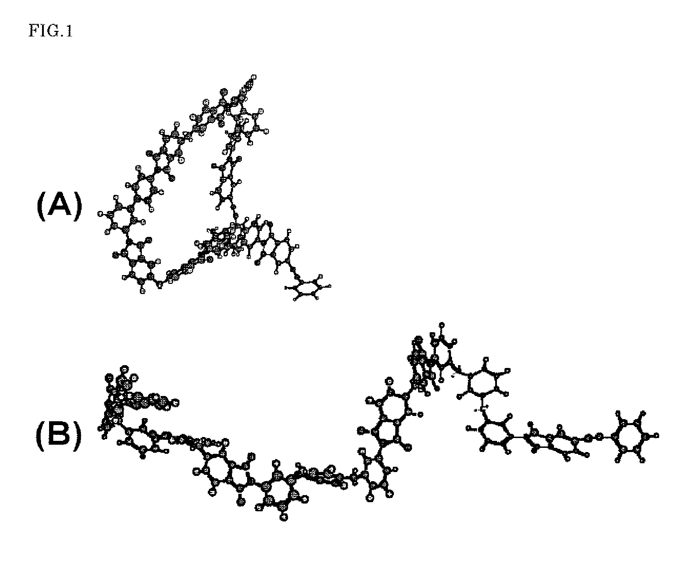

In the imide oligomer of the present invention, as shown in the above formula (2), a nonaxisymmetric site derived from one molecule of the above-described nonaxisymmetric aromatic diamine is located only at the central portion of the oligomer chain. Nevertheless, the oligomer chain, as a whole, has a helical structure as shown in Fig. 1 as an example. As a result, the imide oligomer of the present invention melts at a relatively low temperature; thus the thermal molding is easy. In addition, the thermal decomposition temperature of polyimide resin after thermal curing reaches 500 °C or higher, and the heat resistance is also excellent.

On the other hand, the conventional helical imide oligomer as described in patent literature 1, for example, is excellent in thermal moldability and has excellent heat resistance as a thermally-cured polyimide resin. However, there has been a problem in that the production cost is very high because a relatively expensive nonaxisymmetric compound is included throughout the oligomer chain. On the other hand, the helical imide oligomer of the present invention just has to include one molecule of nonaxisymmetric compound in the oligomer chain. Thus, the usage of an expensive nonaxisymmetric compound can be drastically reduced, and an imide oligomer excellent in thermal moldability and having excellent heat resistance as a thermally-cured polyimide resin can be obtained easily and inexpensively.

The imide oligomer of the present invention can be prepared, for example, according to the below-described steps (A) to (C).
(A) Initially, an oligomer precursor in which an acid dianhydride is condensed on both side chains around one nonaxisymmetric aromatic diamine molecule is prepared by reacting a nonaxisymmetric aromatic diamine and a large excess of an acid dianhydride.
Here, the amount of the added acid dianhydride can be a large excess to one mole of the nonaxisymmetric aromatic diamine, and more specifically about 2 to 20 times the mole of the nonaxisymmetric aromatic diamine. The residue of the acid dianhydride corresponds to X in the above formula (2). Examples of solvents used in the reaction include aprotic solvents such as N-methyl-2-pyrrolidone (NMP), N,N-dimethylformamide, N-N-dimethylacetamide (DMAc), and γ-butyrolactam.

(B) Subsequently, an amic acid oligomer, in which a polyamic acid structure is added to both sides of the oligomer precursor, is prepared by adding a diamine to the above obtained oligomer precursor (containing the unreacted acid dianhydride) and by carrying out a polycondensation reaction.
The diamine residue corresponds to Y in the above formula (2). A suitable amount of the acid dianhydride may be further added with the diamine. By varying the addition ratios of the acid dianhydride and the diamine with respect to the oligomer precursor, the number of added moles of the polyimide structure per molecule can be suitably adjusted. In the present invention, it is necessary to adjust the addition ratios of the above-described respective components so that the average degree of polymerization of each polyimide segment represented by n in the above formula (2) is 1 to 10.

The above reaction step (B) can be carried out in succession to the step (A). When the polymerization reaction is carried out in an aprotic solvent, as exemplified above, an amic acid oligomer having an amide site and a carboxylic acid site in the molecule is usually obtained. This amic acid oligomer can be converted to an imide oligomer through cyclodehydration (imidization) of the above-described amide site and carboxylic acid site, for example, by adding an imidizing agent at a low temperature or by refluxing at a high temperature.

(C) Then, the terminals of the thus obtained imide oligomer or amic acid oligomer are modified by using a compound having a crosslinking reactive group.
Because a crosslinked structure is thermally formed with these crosslinking reactive groups, thermosetting properties can be provided to the imide oligomer.
The residue of the compound having a crosslinking reactive group corresponds to Z in the above formula (2). Here, the compound having a crosslinking reactive group can be any so far as the compound can react with either the unreacted carboxylic acid group of an acid dianhydride or the unreacted amino group of a diamine. The amount of the added compound having a crosslinking reactive group can be suitably adjusted to the equivalent weight of the reactable carboxylic acid group or amino acid group. Normally, the amount is about two moles with respect to one mole of the nonaxisymmetric aromatic diamine.

The above reaction step (C) can be carried out in succession to the steps (A) to (B). Normally, all steps (A) to (C) are carried out in the state of an amic acid oligomer, and the conversion to the imide oligomer is carried out at last. That is, the addition of the compound having a crosslinking reactive group is carried out in step (C) in the state of the amic acid oligomer obtained in step (B). Subsequently, an imide oligomer having crosslinking reactive groups at the molecular terminals is obtained through cyclodehydration (imidization) of the amide site and the carboxylic acid site, for example, by adding an imidizing agent at a low temperature or by refluxing at a high temperature.

In the above steps (A) to (C), non-imidized amic acid oligomers also belong to the category of the present invention. Such an amic acid oligomer can easily be converted to an imide oligomer by thermal cyclodehydration reaction. For example, the amic acid oligomer solution of the present invention can be converted to the imide oligomer of the present invention by refluxing at a high temperature at about 150 to 245 °C. Alternatively, the imide oligomer of the present invention can be obtained, for example, by applying the amic acid oligomer solution on an easily-removable support, such as a glass plate, and through imidization by heating to about 250 to 350 °C.

In the above reaction steps (A) to (C), it is preferable to carry out all the reactions in the presence of inert gas such as argon or nitrogen or in a vacuum.

In the following, the reactions of the above- steps (A) to (C) are illustrated, as a production example of the imide oligomer of the present invention, when 3,4'-diaminodiphenyl ether (nonaxisymmetric aromatic diamine), 4,4'-oxydiphthalic acid dianhydride (acid dianhydride), 1,3-bis(3-aminophenoxy)benzene (diamine), and 4-phenylethynylphthalic acid anhydride (compound containing a crosslinking reactive group) are used.

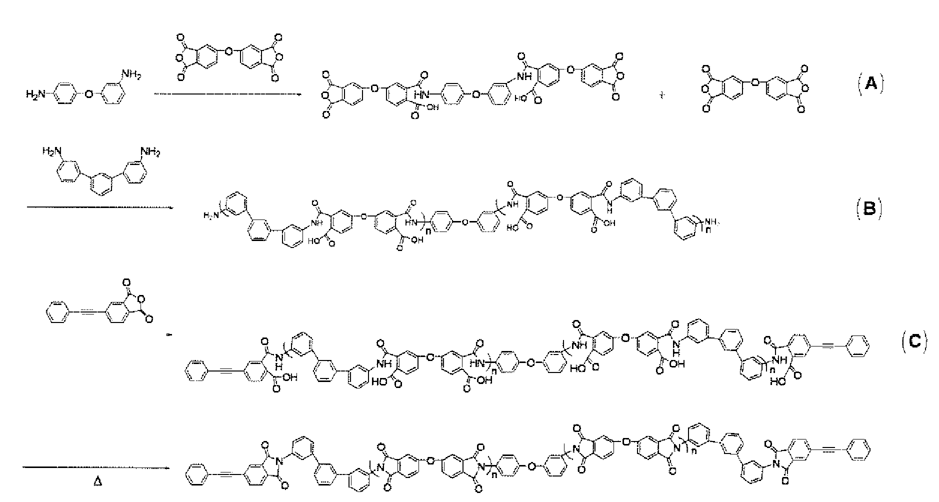

The thus obtained imide oligomer can be directly used as a solution after reaction. Alternatively, it can be used as a powdery imide oligomer, for example, by pouring the post-reaction solution into a large amount of water with stirring, isolating the imide oligomer by filtration, and drying it at about 100 °C. The thus obtained imide oligomer powder can be used, as necessary, as a solution by dissolving it in a suitable solvent.

In addition, the thus obtained imide oligomer can be converted to a polyimide resin, which is excellent in heat resistance, by the thermal curing of the oligomer alone or the oligomer impregnated in a fibrous reinforcing material such as carbon fiber. In addition, because the imide oligomer of the present invention has a helical structure, the moldability is excellent. Thus, the easy molding, for example, with a mold etc. is possible, or the impregnation into a fibrous reinforcing material etc. can be relatively easily carried out.

In the thermal curing of an imide oligomer, the heating temperature and the heating time can be suitably adjusted in accordance with the desired properties of polyimide resin. The thermal curing of the imide oligomer of the present invention normally takes place at about 300 to 370 °C though it depends upon the kinds of compounds having a crosslinking reactive group. More specifically, a cured polyimide resin is obtained, for example, by thermally melting the imide oligomer in the preliminary heating at about 210 to 320 °C for a fixed amount of time and by the subsequent crosslinking reaction by heating at 350 to 400 °C for a fixed amount of time. Normally, the heat resistance of a cured polyimide resin is improved by increasing the heating temperature or lengthening the heating time at each heating step.

The production of a polyimide resin compact with the use of the imide oligomer of the present invention can be carried out according to a publicly known method. For example, a polyimide resin compact can be obtained by filling the imide oligomer powder of the present invention into a mold and by conducting heat-compression molding at 250 to 370 °C under about 0.5 to 5 MPa for about 1 to 5 hours. In addition, for example, a fiber-containing composite of polyimide resin can be obtained by impregnating the imide oligomer solution of the present invention into a fibrous reinforcing material, such as carbon fiber, drying by heating at 180 to 260 °C for about 1 to 5 hours, and further heating at 250 to 370 °C under pressure for about 1 to 5 hours. In addition, for example, a polyimide resin film can be obtained by applying the imide oligomer solution of the present invention on an easily removable support, such as a glass plate, and by heating at 250 to 350 °C for about 1 to 5 hours.

### EXAMPLES

Hereinafter, the present invention will be explained in further detail with reference to examples. However, the present invention is not limited by these examples.
At first, the production method of an imide oligomer when 3,4'-diaminodiphenyl ether was used as the nonaxisymmetric aromatic diamine will be explained.

### Imide oligomer 1A

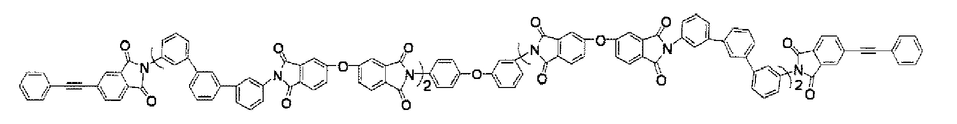

Under argon stream, 3.08 g of 3,4'-diaminodiphenyl ether and 19.08 g of 4,4'-oxydiphthalic acid anhydride were dissolved in 200 mL of dry N,N-dimethylacetamide and stirred at room temperature for about 30 minutes. Then, 17.98 g of 1,3-bis(3-aminophenoxy)benzene was poured into it and stirred for about 1 hour. At last, 7.68 g of 4-phenylethynylphthalic acid anhydride was added and stirred for about 1 hour at room temperature. Then, the solvent was refluxed for about 12 hours, and a gray-white suspension was obtained. The suspension was poured into 800 mL of ion-exchanged water, filtered, washed with water several times, washed with methanol and filtered, and dried overnight at 120 °C; thus a yellow-white powdery imide oligomer was obtained (imide oligomer 1A). The measurement by GPC (Aliance 2695: manufactured by Waters Corporation) was carried out for the obtained imide oligomer, and the number average molecular weight (Mn) was found to be 5.2 x 10³ g/mol (NMP solvent).

Subsequently, the necessary amount of the thus obtained imide oligomer powder was placed on a polyimide film, melted and defoamed on a hot press at 230 °C for 1 hour, and further pressed at 350 °C under 2 MPa for 1 hour; thus a cured polyimide resin was obtained.

The thus obtained cured polyimide resin was analyzed, under nitrogen stream, by TG-DTA (EASTAR 6000: manufactured by SII), and the 5% thermal decomposition temperature (τ₅) was found to be 537.0 °C (under nitrogen stream, rate of temperature increase: 10 °C/min). In the measurement by DSC (Q200: manufactured by TA Instruments), the glass transition temperature (T_{g}) of the cured polyimide resin was 185.2 °C (under nitrogen stream, rate of temperature increase: 10 °C/min).
The coefficient of thermal expansion (CTE) of the cured polyimide resin measured by TMA (EASTAR 6000: manufactured by SII) was 31 ppm. In addition, the initial elastic modulus was measured for the cured polyimide resin as a film of a thickness of about 75µm (EZGraph: manufactured by Shimadzu Corporation) and found to be 3.2 GPa.

As shown in the above results, the imide oligomer 1A designed so that only one nonaxisymmetric 3,4'-diaminodiphenyl ether molecule is located at the center of the oligomer chain started to melt at about 230 °C; thus the thermal molding was easy. In addition, the 5% thermal decomposition temperature (τ₅) of the obtained polyimide resin by the thermal curing of the imide oligomer was higher than 500 °C; thus it was confirmed that the heat resistance was also excellent. In addition, the mechanical properties of the obtained cured polyimide resin were found to be good also.

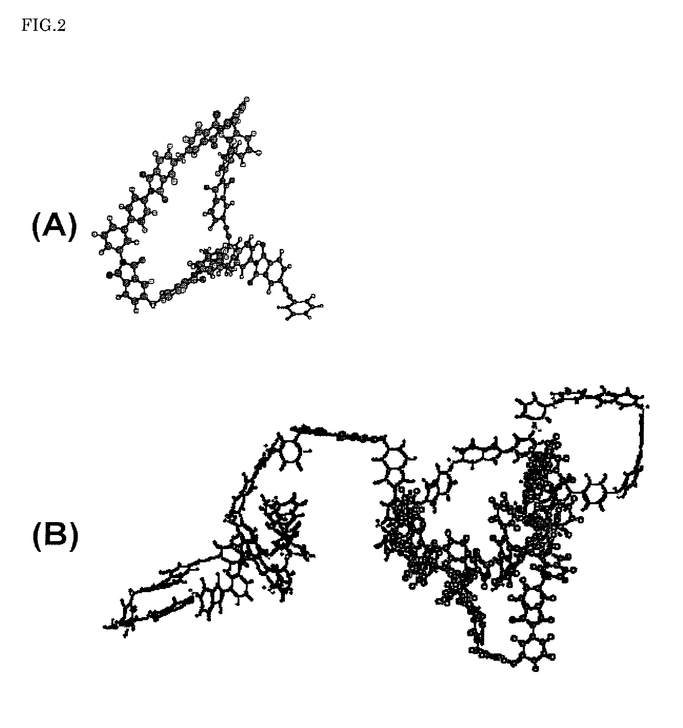

The three-dimensional structural drawing, based on molecular orbital calculations, of the above-described imide oligomer 1A is shown in Fig. 1(A), and the three-dimensional structural drawing of the imide oligomer having no nonaxisymmetric site is shown in Fig. 1(B). As shown in the figure, the above-described imide oligomer has only one nonaxisymmetric 3,4'-diaminodiphenyl ether molecule at the center of the oligomer chain; as a result, the oligomer chain as a whole shows helicity.
In addition, the three-dimensional structural drawing of imide oligomer 1A, in which the imide oligomer has a nonaxisymmetric site only at the central portion of the oligomer chain and the degree of polymerization of the polyimide segment is 2, is shown in Fig. 2(A), and the three-dimensional structural drawing of the imide oligomer, in which the degree of polymerization of the polyimide segment is 6, is shown in Fig. 2(B). As shown in the figure, even when the chain length of the oligomer is somewhat longer, both side chains around the nonaxisymmetric site is not linear, and the oligomer chain as a whole shows helicity.

Because the oligomer chain shows helicity as described above, the thermal molding of the imide oligomer of the present invention can be easily carried out at a lower temperature, for example, compared with the imide oligomer with high linearity (crystallinity). Furthermore, in the polyimide resin after thermal curing, namely, in the polyimide resin formed by crosslinking of terminal reactive groups of the above-described imide oligomer, the above-described helical configurations are intricately entangled and a crosslinked high-order structure is formed. The excellent heat resistance is considered to be obtained as the result of this.

In the following, the production method of the imide oligomer when 3,4'-diaminodiphenylmethane was used as the nonaxisymmetric aromatic diamine will be explained.

### Imide oligomer 2A

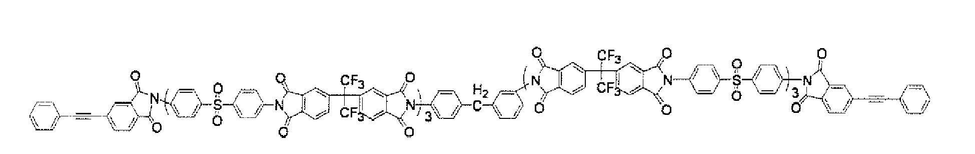

Under argon stream, 3.37 g of 3,4'-diaminodiphenylmethane and 49.72 g of 4,4'-(hexafluoroisopropylidene)diphthalic acid dianhydride were dissolved in 200 mL of dry N,N-dimethylacetamide and stirred at room temperature for about 30 minutes. Then, 27.70 g of bis(4-aminophenyl)sulfone was poured into it and stirred for about 1 hour. At last, 9.25 g of 4-phenylethynylphthalic acid anhydride was added and stirred for about 1 hour at room temperature. Then, the solvent was refluxed for about 12 hours, and a gray-white suspension was obtained. The suspension was poured into 800 mL of ion-exchanged water, filtered, washed with water several times, washed with methanol and filtered, and dried overnight at 120 °C; thus a white powdery imide oligomer was obtained (imide oligomer 2A). The measurement by GPC (Aliance 2695: manufactured by Waters Corporation) was carried out for the obtained imide oligomer, and the number average molecular weight (Mn) was found to be 4.5 x 10³ g/mol (NMP solvent).

Subsequently, the necessary amount of the thus obtained imide oligomer powder was placed on a polyimide film, melted and defoamed on a hot press at 280 °C for 30 minutes, and further pressed at 350 °C under 2 MPa for 1 hour; thus a light brown transparent cured polyimide resin was obtained.

The thus obtained cured polyimide resin was analyzed, under nitrogen stream, by TG-DTA (EASTAR 6000: manufactured by SII), and the 5% thermal decomposition temperature (τ₅) was found to be 527.7 °C (under nitrogen stream, rate of temperature increase: 10 °C/min). In the measurement by DSC (Q200: manufactured by TA Instruments), the glass transition temperature (T_{g}) of the cured polyimide resin was 252.7 °C (under nitrogen stream, rate of temperature increase: 10 °C/min).
The coefficient of thermal expansion (CTE) of the cured polyimide resin measured by TMA (EASTAR 6000: manufactured by SII) was 38 ppm. In addition, the initial elastic modulus was measured for the cured polyimide resin as a film of a thickness of about 75µm (EZGraph: manufactured by Shimadzu Corporation) and found to be 2.8 GPa.

As shown in the above results, the imide oligomer 2A designed so that only one nonaxisymmetric 3,4'-diaminodiphenylmethane molecule is located at the center of the oligomer chain also started to melt at about 280 °C, similarly to the above-described imide oligomer 1A; thus the thermal molding was easy. In addition, the 5% thermal decomposition temperature (τ₅) of the obtained polyimide resin by the thermal curing of the imide oligomer was higher than 500 °C; thus it was confirmed that the heat resistance was also excellent. In addition, the mechanical properties of the obtained cured polyimide resin were found to be good also.

Subsequently, the present inventors prepared various imide oligomers by varying the acid dianhydride, diamine, heating temperature, etc. according to the respective production methods of imide oligomers 1A and 2A in the above examples. Then, the 5% thermal decomposition temperature (τ₅) and the glass transition temperature (T_{g}) of the thermally-cured polyimide resins were measured. The instruments used for measurement were the same as the above-described examples. The results are shown in the following Tables 1 and 2.

**Table 1**

| Imide oligomer | Nonaxisymmetric central diamine | Side chain acid dianhydride | Side chain diamine | Degree of polymerization of side chain polyimide n | Terminal reactive compound | Heating temperature (°C)* | Glass transition point T_{g} (°C) | 5% thermal decomposition τ₅ (°C) |
|---|---|---|---|---|---|---|---|---|
| 1A | 3,4'-ODA | 4,4'-ODPA | 1,3,3-APB | 2 | PEPA | 230-350 | 185.2 | 537.0 |
| 1B | 3,4'-ODA | 4,4'-ODPA | 1,3,3-APB | 3 | PEPA | 250→350 | 188.7 | 538.5 |
| 1C | 3,4'-ODA | 4,4'-ODPA | 1,3,3-APB | 6 | PEPA | 280→350 | 178.0 | 563.5 |
| 1D | 3,4'-ODA | 4,4'-ODPA | 4,4'-ODA | 1 | PEPA | 320→350 | 375.0 | 535.7 |
| 1E | 3,4'-ODA | 4,4'-ODPA | 4,4'-ODA | 2 | PEPA | 320→350 | 369.2 | 538.8 |
| 1F | 3,4'-ODA | 4,4'-ODPA | 4,4'-ODA | 3 | PEPA | 350→350 | 265.1 | 530.6 |
| 1G | 3,4'-ODA | 4,4'-ODPA | 6FTPDA | 3 | PEPA | 280→350 | 292.6 | 515.3 |
| 1H | 3,4'-ODA | 4,4'-ODPA | FDA | 3 | PEPA | 320→350 | 334.8 | 563.8 |
| 1I | 3,4'-ODA | 4,4'-ODPA | FDA/ 1,3,3-APB** | 3 | PEPA | 320→350 | 327.0 | 558.2 |

| | | | | | | | | |
|---|---|---|---|---|---|---|---|---|
| *The initial heating was conducted at the predetermined temperature under ambient temperature for one hour, and the final heating was conducted at 350 °C under 2 MPa for one hour. **FDA:1,3,3-APB=1:1 (molar ratio) | | | | | | | | |

**Table 2**

| Imide oligomer | Nonaxisymmetric central diamine | Side chain acid dianhydride | Side chain diamine | Degree of polymerization of side chain Polyimide n | Terminal reactive compound | Heating temperature (°C)* | Glass transition point T_{g} (°C) | 5% thermal decomposition τ₅ (°C) |
|---|---|---|---|---|---|---|---|---|
| 2A | 3,4'-MDA | 6FDPA | SDA | 3 | PEPA | 280→350 | 252.7 | 527.7 |
| 2B | 3,4'-MDA | 6FDPA | FDA | 3 | PEPA | 280→350 | 330.0 | 557.3 |
| 2C | 3,4'-MDA | 6FDPA | DPSDA | 3 | PEPA | 280→350 | 264.4 | 510.7 |

| | | | | | | | | |
|---|---|---|---|---|---|---|---|---|
| *The initial heating was conducted at 280 °C under ambient temperature for one hour, and the final heating was conducted at 350 °C under 2 MPa for one hour. | | | | | | | | |

The abbreviations used in the above Tables 1 and 2 are as follows.
3,4'-ODA; 3,4'-diaminodiphenyl ether
3,4'-MDA; 3,4'-diaminodiphenylmethane
1,3,3-APB; 1,3-bis(3-aminophenoxy)benzene
4,4'-ODA; 4,4'-diaminodiphenyl ether
6FTPDA; 2,2-bis[4-(4-aminophenoxy)pheny]hexafluoropropane
FDA; 2,2-bis(4-aminophenyl)hexafluoropropane
SDA; bis(4-aminophenyl)sulfone
DPSDA; bis(4-aminophenyl)sulfone (diamine)
4,4'-ODPA; 4,4'-oxydiphthalic anhydride
6FDPA; 4,4'-(hexafluoroisopropylidene)diphthalic acid dianhydride
PEPA; 4-phenylethynylphthalic acid anhydride

As shown in the above Tables 1 and 2, also in imide oligomers 1B to 1I, 2B, and 2C, in which nonaxisymmetric 3,4'-diaminodiphenyl ether or 3,4-diaminodiphenylmethane was placed at the center of the oligomer chain and the degree of polymerization of the side chain polyimide and the kinds of the side chain diamines were varied, the 5% thermal decomposition temperature (τ₅) exceeded 500 °C, similarly to the cases of the above-described imide oligomers 1A and 2A, and it was confirmed that all of them had excellent heat resistance.

Subsequently, in order to investigate the effect of the location of nonaxisymmetric 3,4'-diaminodiphenyl ether or 3,4'-diaminodiphenylmethane in the oligomer chain, imide oligomers 1J and 2D were produced. They were produced in exactly the same way as the above-described imide oligomers 1A and 2A except that each nonaxisymmetric aromatic diamine was introduced at the terminal of the each polyimide segment (between the each polyimide segment and the terminal reactive functional group). The 5% thermal decomposition temperature (τ₅) and the glass transition temperature (T_{g}) of the thermally-cured Polyimide resins were measured in the same way as the above-described tests. The results are shown in the following Tables 3 and 4.

**Table 3**

| Imide oligomer | Position of nonaxisymmetric 3,4'-ODA | Glass transition point T_{g} (°C) | 5% thermal decomposition τ₅ (°C) |
|---|---|---|---|
| 1A | Center | 185.2 | 537.0 |
| 1J | Terminal | 164.0 | 511.1 |

| | | | |
|---|---|---|---|
| Heating condition: 230°C, 1 hr → 350°C, 2 MPa, 1 hr | | | |

**Table 4**

| Imide oligomer | Position of nonaxisymmetric 3,4'-ODA | Glass transition point T_{g} (°C) | 5% thermal decomposition τ₅ (°C) |
|---|---|---|---|
| 2A | Center | 252.7 | 527.7 |
| 2D | Terminal | 183.6 | 511.1 |

| | | | |
|---|---|---|---|
| Heating condition: 230°C, 1 hr → 350°C, 2 MPa, 1 hr | | | |

As shown in the above Tables 3 and 4, both the glass transition temperature (T_{g}) and the 5% thermal decomposition temperature (τ₅) were poorer in imide oligomers 1J and 2D, in which nonaxisymmetric 3,4'-diaminodiphenyl ether or 3,4-diaminodiphenylmethane was introduced at the terminal of the oligomer chain, compared with imide oligomers 1A and 2A, in which respective nonaxisymmetric aromatic diamines were introduced at the center, though other conditions were exactly the same. This is considered as follows. Because the nonaxisymmetric site is at the terminal, it is difficult for the oligomer chain to have helicity and the oligomer chain takes an almost linear three-dimensional structure.

In order to further investigate the effect of heating conditions to the polyimide resin obtained by the thermal curing of the imide oligomer of the present invention, cured polyimide resins were prepared by varying the heating time with the use of the above-described imide oligomers 1A and 2A. In the same way as the above-described tests, the 5% thermal decomposition temperature (τ₅) and glass transition temperature (T_{g}) were measured. The results are shown in the following Tables 5 and 6.

**Table 5**

| Imide oligomer | Heating condition | Glass transition point T_{g} (°C) | 5% thermal decomposition τ₅ (°C) |
|---|---|---|---|
| 1A | 230°C,1hr→350 °C,2MPa,1hr | 185.2 | 537.0 |
| 1A | 230°C,1hr→350°C,2MPa,5hr | 358.3 | 581.0 |

**Table 6**

| Imide oligomer | Heating condition | Glass transition point T_{g} (°C) | 5% thermal decomposition τ₅ (°C) |
|---|---|---|---|
| 2A | 230°C,1hr→350°C,2MPa,1hr | 252.7 | 527.7 |
| 2A | 230°C,1hr-350°C,2MPa,5hr | 358.3 | 581.0 |

As shown in the above Tables 5 and 6, both the glass transition temperature (T_{g}) and the 5% thermal decomposition temperature (τ₅) of the polyimide resins improved significantly by increasing the heating time of thermal curing from 1 hour to 5 hours.
Thus, it is considered that various polyimide resins with desired properties can be produced, with the use of the imide oligomer of the present invention, by suitably adjusting the temperature and time of thermal curing.

As explained above, according to the present invention, the imide oligomer becomes helical by placing one nonaxisymmetric aromatic diamine molecule only at the central portion of the imide oligomer chain. As a result, an imide oligomer excellent in thermal moldability and having excellent heat resistance as a thermally-cured polyimide resin can be obtained easily and inexpensively.

## Claims

1. An imide oligomer including a nonaxisymmetric site derived from one nonaxisymmetric aromatic diamine molecule represented by below formula (1), only at a central portion of the oligomer chain, 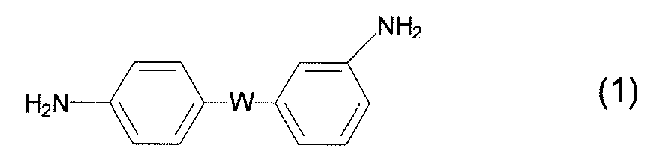 in the formula (1), W is a direct bond, -O-, -CH₂-, -C₂H₄-, -C(CH₃)₂-, -CF₂-, -C₂F₄-, -C(CF₃)₂-, -C(=O)-, -NH-, -NH-C(=O)-, -C(=O)-NH-, -S-, -S(=O)-, or -S(=O)₂-.

2. The imide oligomer according to claim 1, represented by below formula (2), 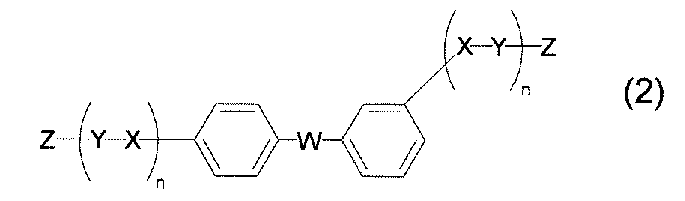 in the formula (2), W is a direct bond, -O-, -CH₂-, -C₂H₄-, -C(CH₃)₂-, -CF₂-, -C₂F₄-, -C(CF₃)₂-, -C(=O)-, -NH-, -NH-C(=O)-, -C(=O)-NH-, -S-, -S(=O)-, or -S(=O)₂-, X is an acid dianhydride residue, Y is a diamine residue, Z is a crosslinking reactive group, and n is the average degree of polymerization of each polyimide segment represented by (X-Y) and it is 1 to 10.

3. The imide oligomer according to claim 1 or 2, wherein W in the formula (1) or (2) is - O- or -CH₂-.

4. The imide oligomer according to claim2 or 3, wherein the average degree of polymerization of each Polyimide segment n is 1 to 6 and the average molecular weight of the entire imide oligomer is 8000 or less.

5. The imide oligomer according to any of claim2 to 4, wherein the acid dianhydride residue X is derived from at least one or more acid dianhydrides selected from pyromellitic acid dianhydride, 3,3',4,4'-benzophenone tetracarboxylic acid dianhydride, 4,4'-biphthalic acid dianhydride, 3,3',4,4'-diphenyl sulfonic acid, 4,4'-oxydiphthalic acid dianhydride, 3,4,9,10-perylenetetracarboxylic acid dianhydride, naphthalene-1,4,5,8-tetracarboxylic acid dianhydride, 4,4'-(hexafluoroisopropylidene)diphthalic acid dianhydride, and 2,2-bis(4-carboxyphenyl)propanoic acid dianhydride.

6. The imide oligomer according to any of claim2 to5, wherein the diamine residue Y is derived from at least one or more diamines selected from 4,4-diaminodiphenyl ether, 1,3-bis(3-aminophenoxy)benzene, 1,3-bis(4-aminophenoxy)benzene, 1,4-bis(4-aminophenoxy)benzene, 2,2-bis(4-aminophenyl)hexafluoropropane, bis(4-aminophenyl)sulfone, 2,2-bis[4-(4-aminophenoxy)phenyl]hexafluoropropane, α,α'-bis(4-aminophenyl)-1,4-diisopropylbenzene, and 3,3'-bis(4-aminophenyl)flnorene.

7. The imide oligomer according to any of claim2 to 6, wherein the terminal crosslinking reactive group Z is derived from at least one or more compounds selected from 4-phenylethynylphthalic acid anhydride, phthalic acid anhydride, 5-norbornene-2,3-dicarboxylic acid anhydride, 2,5-norbornadiene-2,3-dicarboxylic acid anhydride, maleic acid anhydride, propargylamine, phenylethynylaniline, ethynylaniline, aminostyrene, and vinylaniline.

8. An amic acid oligomer including a nonaxisymmetric site derived from one nonaxisymmetric aromatic diamine molecule represented by below formula (1), only at a central portion of the oligomer chain, 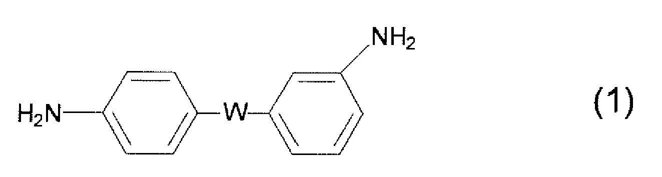 in the formula (1), W is a direct bond, -O-, -CH₂-, -C₂H₄-, -C(CH₃)₂-, -CF₂-, -C₂F₄-, -C(CF₃)₂-, -C(=O)-, -NH-, -NH-C(=O)-, -C(=O)-NH-, -S-, -S(=O)-, or -S(=O)₂-.

9. A polyimide resin obtained by thermally curing the imide oligomer according to any of claim 1 to 7.

10. A production method of an imide oligomer including a nonaxisymmetric site derived from one nonaxisymmetric aromatic diamine molecule represented by below formula (1), only at a central portion of the oligomer chain, comprising
(A) a preparation step of an oligomer precursor by reacting a nonaxisymmetric aromatic diamine represented by below formula (1) and a large excess of an acid dianhydride, and
(B) a preparation step of an imide oligomer or an amic acid oligomer by the polycondensation of the oligomer precursor obtained in the above step, unreacted acid dianhydride, and a diamine, 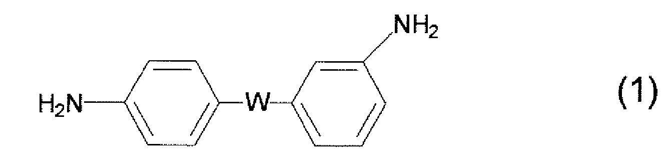 in the formula (1), W is a direct bond, -O-, -CH₂-, -C₂H₄-, -C(CH₃)₂-, -CF₂-, -C₂F₄-, -C(CF₃)₂-, -C(=O)-, -NH-, -NH-C(=O)-, -C(=O)-NH-, -S-, -S(=O)-, or -S(=O)₂-.

11. The production method of an imide oligomer according to claim10, further comprising
(C) a terminal modification step of the imide oligomer or the amic acid oligomer obtained in the above step by using a compound having a crosslinking reactive group.

## Amended claims

### Amended claims under Art. 19.1 PCT

**1.** An imide oligomer represented by below formula (2), including a nonaxisymmetric site derived from one nonaxisymmetric aromatic diamine molecule, only at a central portion of the oligomer chain, 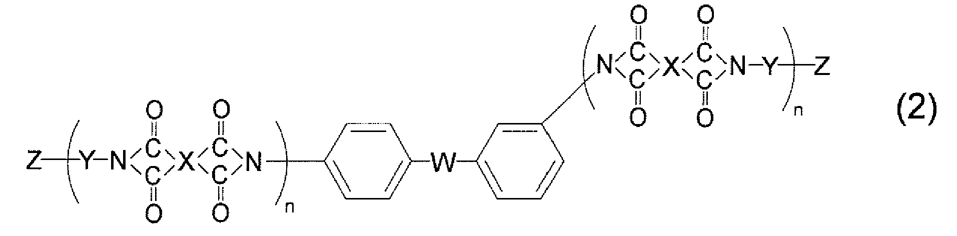 in the formula (2), W is a direct bond, -O-, -CH₂-, -C₂H₄-, -C(CH₃)₂-, -CF₂-, -C₂F₄-, -C(CF₃)₂-, -C(=O)-, -NH-, -NH-C(=O)-, -C(=O)-NH-, -S-, -S(=O)-, or -S(=O)₂-, X is an axisymmetric acid dianhydride residue, Y is an axisymmetric diamine residue, Z is a crosslinking reactive group, and n is the average degree of polymerization of each polyimide segment represented by (X-Y) and it is 1 to 10.

**2.** The imide oligomer according to claim 1, wherein W in the formula (2) is -O- or -CH₂-.

**3.** The imide oligomer according to claim 1 or 2, wherein the average degree of polymerization of each Polyimide segment n is 1 to 6 and the average molecular weight of the entire imide oligomer is 8000 or less.

**4.** The imide oligomer according to any of claim 1 to 3, wherein the axisymmetric acid dianhydride residue X is derived from at least one or more acid dianhydrides selected from pyromellitic acid dianhydride, 3,3',4,4'-benzophenone tetracarboxylic acid dianhydride, 4,4'-biphthalic acid dianhydride, 3,3',4,4'-diphenyl sulfonic acid, 4,4'-oxydiphthalic acid dianhydride, 3,4,9,10-perylenetetracarboxylic acid dianhydride, naphthalene-1,4,5,8-tetracarboxylic acid dianhydride, 4,4'-(hexafluoroisopropylidene)diphthalic acid dianhydride, and 2,2-bis(4-carboxyphenyl)propanoic acid dianhydride.

**5.** The imide oligomer according to any of claim 1 to 4, wherein the axisymmetric diamine residue Y is derived from at least one or more diamines selected from 4,4-diaminodiphenyl ether, 1,3-bis(3-aminophenoxy)benzene, 1,3-bis(4-aminophenoxy)benzene, 1,4-bis(4-aminophenoxy)benzene, 2,2-bis(4-aminophenyl)hexafluoropropane, bis(4-aminophenyl)sulfone, 2,2-bis[4-(4-aminophenoxy)phenyl]hexafluoropropane, α,α'-bis(4-aminophenyl)-1,4-diisopropylbenzene, and 3,3'-bis(4-aminophenyl)fluorene.

**6.** The imide oligomer according to any of claim 1 to 5, wherein the terminal crosslinking reactive group Z is derived from at least one or more compounds selected from 4-phenylethynylphthalic acid anhydride, 5-norbornene-2,3-dicarboxylic acid anhydride, 2,5-norbornadiene-2,3-dicarboxylic acid anhydride, maleic acid anhydride, propargylamine, phenylethynylaniline, ethynylaniline, aminostyrene, and vinylaniline.

**7.** An amic acid oligomer represented by below formula (3), including a nonaxisymmetric site derived from one nonaxisymmetric aromatic diamine molecule, only at a central portion of the oligomer chain, 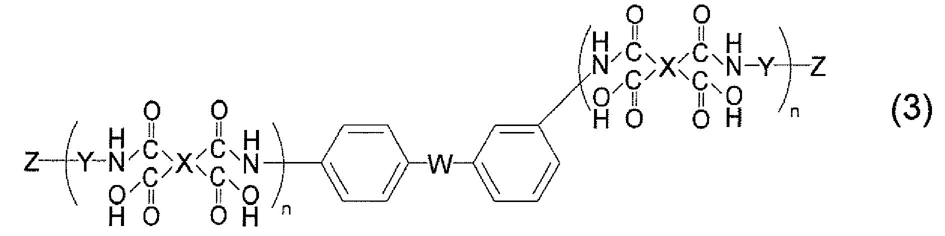 in the formula (3), W is a direct bond, -O-, -CH₂-, -C₂H₄-, -C(CH₃)₂-, -CF₂-, -C₂F₄-, -C(CF₃)₂-, -C(=O)-, -NH-, -NH-C(=O)-, -C(=O)-NH-, -S-, -S(=O)-, or -S(=O)₂-, X is an axisymmetric acid dianhydride residue, Y is an axisymmetric diamine residue, Z is a crosslinking reactive group, and n is the average degree of polymerization of each polyimide segment represented by (X-Y) and it is 1 to 10.

**8.** A polyimide resin obtained by thermally curing the imide oligomer according to any of claim 1 to 6.

**9.** A production method of an imide oligomer including a nonaxisymmetric site derived from one nonaxisymmetric aromatic diamine molecule represented by below formula (1), only at a central portion of the oligomer chain, comprising
(A) a preparation step of an oligomer precursor by reacting a nonaxisymmetric aromatic diamine represented by below formula (1) and an acid dianhydride of 2 to 20 times mole of the nonaxisymmetric aromatic diamine,
(B) a preparation step of an imide oligomer or an amic acid oligomer by the polycondensation of the oligomer precursor obtained in the above step, unreacted acid dianhydride, and a diamine, and
(C) a terminal modification step of the imide oligomer or the amic acid oligomer obtained in the above steps by using a compound having a crosslinking reactive group, 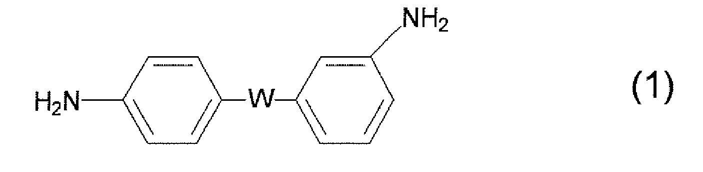 in the formula (1), W is a direct bond, -O-, -CH₂-, -C₂H₄-, -C(CH₃)₂-, -CF₂-, -C₂F₄-, -C(CF₃)₂-, -C(=O)-, -NH-, -NH-C(=O)-, -C(=O)-NH-, -S-, -S(=O)-, or -S(=O)₂-.
